# DEMANDE DE BREVET EUROPEEN

(11) **EP 0 968 905 A1**
(43) Date de publication de la demande: **05.01.2000**
(21) Numéro de dépôt: 99440164.4
(22) Date de dépôt: 24.06.1999
(51) Int. Cl.: B62D 53/00, B62D 1/28

(54) **Train de véhicule de transport, du type train suiveur de tunnelier**

(30) Priorité: 29.06.1998 FR 9808361
(71) Demandeur: Gaussin SA, 70400 Héricourt (FR)
(72) Inventeur: Guyot, Martial, 70400 Hericourt (FR)
(74) Mandataire: Rhein, Alain

(57) **Abrégé**

L'invention a trait à un train de véhicule de transport, du type train suiveur de tunnelier, dont les véhicules (2, 2A, 3), montés chacun sur des essieux directeurs (4, 4A, 4B ; 5, 5A), sont reliés entre eux par des moyens d'articulation (6) constituant, en outre, des moyens de commande d'orientation des essieux directeurs pour un déplacement du type monotrace du train (1).

Ce train de véhicule de transport est caractérisé par le fait que les deux véhicules (2, 2A) placés aux extrémités (17, 18) du train (1) sont du type automoteur à fonctionnement réversible, le véhicule automoteur (2 ; 2A) qui, dans le sens du déplacement du train vient fermer la marche étant, par l'intermédiaire de moyens de gestion de fonctionnement approprié, selon le cas, commandé en mode de fonctionnement autosuffisant pour assurer son déplacement sans pousser les autres véhicules du train ou en mode de freinage pour permettre l'arrêt ou le ralentissement du train (1) ou encore pour maintenir celui-ci en tension en descente.

## Description

L'invention a trait à un train de véhicule de transport, du type train suiveur de tunnelier, dont lesdits véhicules, montés chacun sur des essieux directeurs, sont reliés entre eux par des moyens d'articulation constituant, en outre, des moyens de commande d'orientation des essieux directeurs pour un déplacement de type monotrace du train.

A l'heure actuelle, les trains suiveurs pour l'approvisionnement d'un tunnelier sont similaires à des trains de chemin de fer et comportent, par conséquent, un véhicule tracteur et plusieurs wagons montés sur des moyens de roulement, du type boggie, à même à se déplacer sur des rails, tant à l'intérieur du tunnel pour accéder au tunnelier proprement dit, qu'à l'extérieur de ce tunnel où l'on trouve, habituellement, les installations annexes telles que les zones de stockage de marchandises, la centrale à béton et mortier et autres.

Tout particulièrement à ce propos, le déplacement nécessairement sur rails de tels trains suiveurs de tunnelier rend les installations, extérieurement au tunnel, particulièrement encombrantes et rigides. Cela conditionne, également, l'implantation des zones d'approvisionnement de ce train qui, là encore, ne tolère aucune flexibilité. Or, de plus en plus fréquemment des tunnels sont creusés à proximité de zones fortement urbanisées où, précisément, on ne dispose que de très peu de place à proximité immédiate de l'entrée d'un tunnel en cours de forage.

Par ailleurs, de tels trains montés sur rails ne sont en mesure de franchir, habituellement, que des pentes de faible inclinaison, de l'ordre de 5 % maximum, en raison du faible degré d'adhérence que procurent les boggies sur ces rails métalliques. Cela pose le problème de l'accès à la rampe du tunnelier, sans compter que pour améliorer l'adhérence il n'y a d'autre solution que d'augmenter le poids des véhicules nécessitant un accroissement de la puissance du véhicule tracteur. Ceci est à l'origine d'une autre difficulté, à savoir l'évacuation de la quantité importante des calories produites par ce véhicule tracteur de forte puissance à l'intérieur du tunnel, sans compter qu'un tel accroissement de puissance se traduit par un encombrement plus important, souvent non compatible avec les dimensions figées d'un tunnel.

Finalement, si l'aménagement de rails pour le déplacement du train est en soi contraignant, une telle technologie est, toutefois, avantageuse en ce qu'elle ne pose aucun problème de guidage du train. En effet, chacun des véhicules de ce dernier est parfaitement maintenu, latéralement, par les rails, sans compter que la gestion de fonctionnement de ce train dans ses déplacements peut être assurée par un seul véhicule tracteur qui peut, à la fois, tirer et pousser, voire ralentir à lui seul, le train.

En fin de compte, la présente invention se veut à même d'apporter une solution au problème qu'engendre l'utilisation de rails pour le déplacement de tels trains de véhicules du type train suiveur de tunnelier. Précisément, la solution selon l'invention permet de s'affranchir de ces rails tout en offrant toutes les garanties que les véhicules du train se déplacent, dans tous les cas, sur une seule et même trace et soient maintenus, constamment, en tension de manière à éviter tout débordement transversal de l'un de ces véhicules, que ce soit en phase de freinage ou encore lors de déplacements en descente.

A cet effet, l'invention concerne un train de véhicule de transport, du type train suiveur de tunnelier, dont les véhicules, montés chacun sur des essieux directeurs, sont reliés entre eux par des moyens d'articulation constituant, en outre, des moyens de commande d'orientation des essieux directeurs pour un déplacement du type monotrace du train, caractérisé par le fait que les deux véhicules placés aux extrémités du train sont du type automoteur à fonctionnement réversible, le véhicule automoteur qui, dans le sens du déplacement de train, vient fermer la marche étant, par l'intermédiaire de moyens de gestion de fonctionnement appropriés, selon le cas, commandé en mode de fonctionnement auto suffisant pour assurer son déplacement sans pousser les autres véhicules du train, ou en mode de freinage pour permettre l'arrêt ou le ralentissement du train ou encore pour maintenir celui-ci en tension en descente.

En fin de compte, en faisant appel à la technologie des attelages de véhicules du type monotrace, mais aussi au travers de la gestion astucieuse du fonctionnement de deux véhicules automoteurs placés aux extrémités du train, celui-ci peut s'affranchir pour son déplacement, de rails. Ceci lui procure une très grande mobilité, donc un encombrement réduit dans ses déplacements en dehors du tunnel. Par ailleurs, le véhicule d'un tel train étant susceptible d'être monté sur des roues à pneumatique, notamment en ce qui concerne les véhicules tracteurs, ceux-ci offrent une très grande adhérence au sol permettant au train de gravir des pentes plus importantes, ce qui facilite, notamment, l'accès à la rampe du tunnelier.

Avantageusement, chaque véhicule reçoit, en outre, des moyens de correction de guidage sous forme de moyens détecteurs placés sur le véhicule qui, en coopération avec des moyens de repérage placés au sol sont aptes à commander des moyens d'ajustement de l'orientation d'un essieu selon des amplitudes déterminées.

En fait, un système mécanique de suivi monotrace présente une dérive d'un véhicule par rapport à l'autre qui peut être de plusieurs centimètres du véhicule de tête par rapport au véhicule de queue. En fin de compte, de tels moyens de correction de direction conformes à l'invention, permettent de remédier à cet inconvénient peu tolérable en cours de déplacement du train à l'intérieur du tunnel.

L'invention présente encore ceci de particulier en ce que chacune des roues des essieux desdits véhicules sont d'inclinaison ajustable, soit gravitairement, soit hydrauliquement et/ou pneumatiquement ce qui permet à ces roues de s'adapter, parfaitement, au profil du terrain et, tout particulièrement, au profil concave des voussoirs définissant, substantiellement, les parois du tunnel.

En fait, une telle caractéristique permet d'éviter tout effort latéral sur les roues et donc les pneumatiques du véhicule d'où résulte, habituellement, des sollicitations importantes au niveau des essieux mais, bien sûr, une usure prématurée et anormale des pneumatiques. Par ailleurs, lorsque cette inclinaison intervient gravitairement, ce système peut remplir la fonction d'amortisseur lors du passage d'un véhicule sur un obstacle quelconque.

D'autres buts et avantages de la présente invention apparaîtront au cours de la description qui va suivre se rapportant à un mode de réalisation.

La compréhension de cette description sera facilitée en se référant aux dessins joints en annexe.
- la figure 1 est une représentation schématisée d'un train de véhicule de transport, du type train suiveur de tunnelier conforme à l'invention ;
- les figures 2, 3 et 4 correspondent à une représentation schématisée du principe de fonctionnement des moyens de correction de guidage associés à chaque véhicule du train ;
- les figures 5 et 6 représentent le principe de fonctionnement de ces moyens de correction de guidage à l'approche d'un rail constituant les moyens de repérage au sol ;
- les figures 7 et 8 représentent, de manière schématisée et selon un premier mode de réalisation un essieu dont les roues sont d'inclinaison ajustable ;
- la figure 9 est une illustration schématisée et en plan d'un essieu directeur comportant des moyens d'ajustement de l'orientation des roues conformes à l'invention ;
- la figure 10 est une représentation en élévation de cet essieu, dont les roues sont d'inclinaison ajustable ;
- la figure 11 est une représentation schématisée et de détail du montage de la roue sur l'essieu à l'aide des moyens permettant d'ajuster leur inclinaison gravitairement.

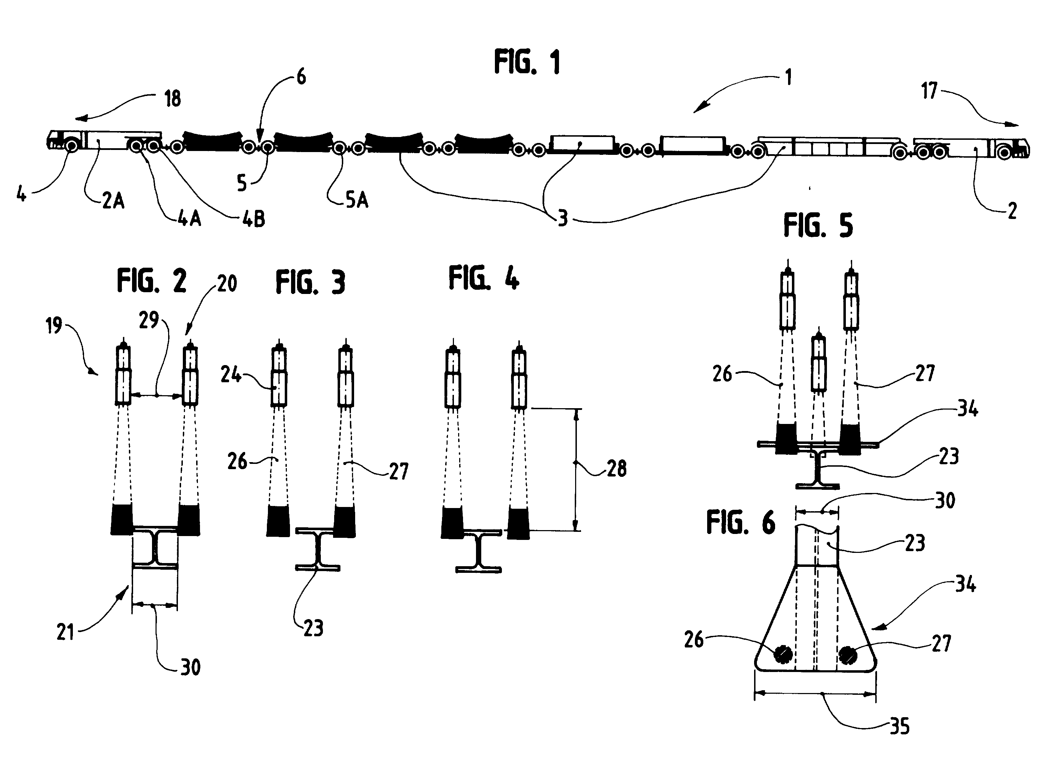

Tel que représenté dans la figure 1, la présente invention a trait à un train de véhicule de transport, plus particulièrement à un train suiveur de tunnelier.

Ainsi, ce train, référencé 1 dans la figure 1, est composé de plusieurs véhicules 2, 2A, 3 dont certains sont de type automoteurs comme cela sera décrit plus en avant dans la description et d'autres correspondent à des remorques de transport telles que des remorques porte-voussoirs, des remorques porte-mortier ou encore des remorques destinées à des transports de matériel divers.

En fait, ces véhicules sont montés, chacun, sur des essieux directeurs 4, 4A, 4B ; 5, 5A et sont reliés entre eux par des moyens d'articulation 6 constituant des moyens de commande d'orientation des essieux directeurs précédemment cités pour un déplacement du type monotrace du train 1.

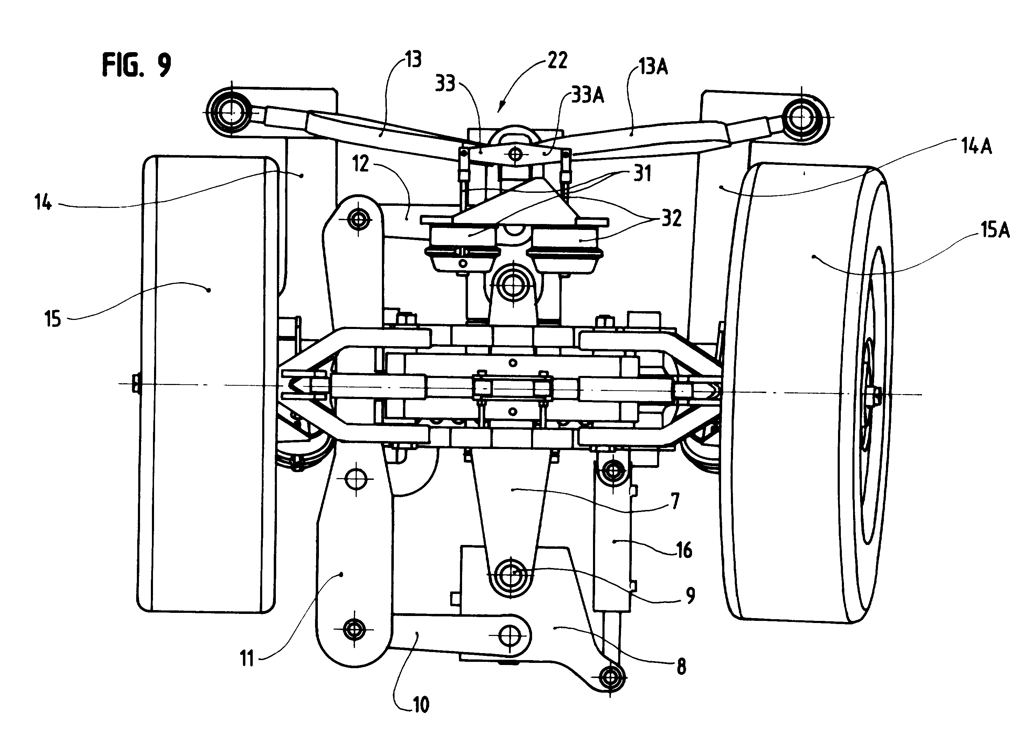

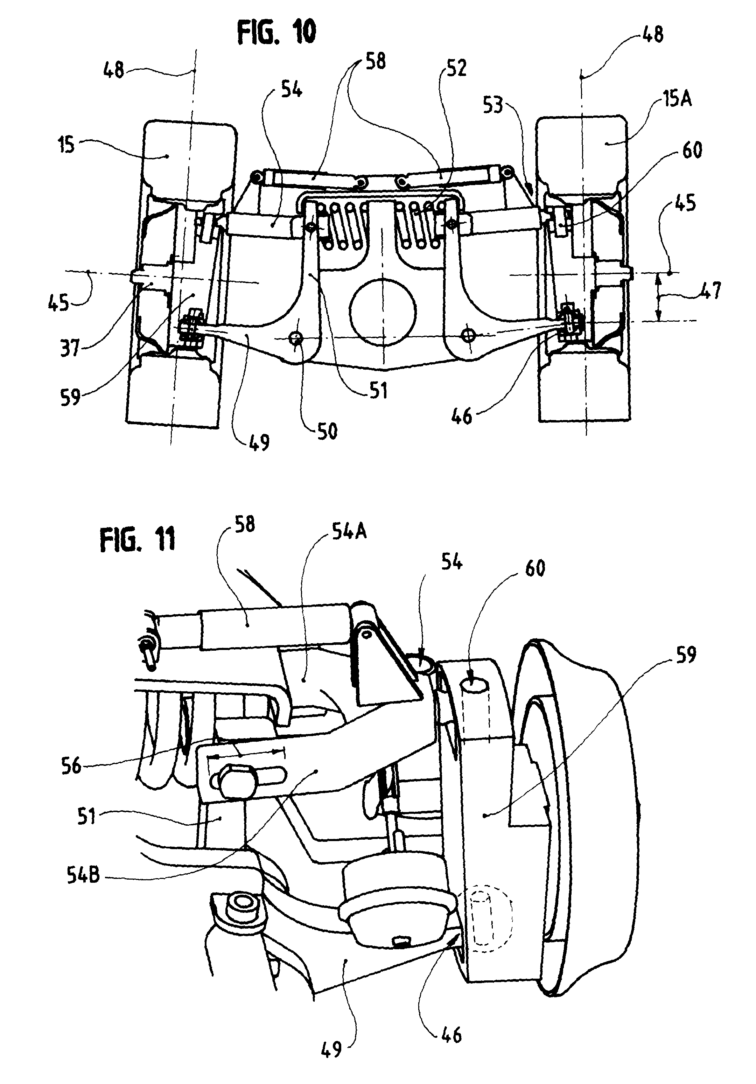

Il existe, d'ores et déjà, différents types de mécanismes permettant d'assurer qu'un véhicule tracté suit, avec une dérive limitée, le véhicule qui le précède. Il a été représenté figures 9 et 10 un tel essieu directeur 5 où l'on voit qu'au niveau du timon 7 (correspondant, dans ce cas, au timon d'un essieu avant d'un véhicule, destiné, par conséquent, à coopérer avec le timon arrière associé à l'essieu arrière du véhicule qui le précède), est montée une pièce articulée 8 prévue apte à recevoir, précisément, le timon associé à l'essieu arrière du véhicule placé à l'avant. Ainsi, sous l'impulsion de ce timon du véhicule précédent, ladite pièce articulée 8 est amenée à pivoter autour d'un axe vertical 9 qui, par l'intermédiaire d'une transmission à bielles 10, 11, 12, 13, 13A, et de bras 14, 14A retransmet ce pivotement, avec une amplitude définie, aux roues 15, 15A correspondant à l'essieu 5. En outre, cette pièce articulée sur le timon 7 retransmet son pivotement soit hydrauliquement et/ou pneumatiquement comme cela est représenté figure 9 et donc au moyen d'un vérin 16, soit mécaniquement, aux roues de l'essieu arrière 5A dudit véhicule. Plus exactement lorsque les roues de l'essieu avant pivotent, autour d'un axe vertical, dans une direction déterminée sous l'impulsion de la pièce articulée 8, les roues correspondant à l'essieu arrière pivotent, elles, selon une amplitude identique dans une direction inverse. Bien sûr, le timon de cet essieu arrière retransmet le mouvement au timon avant de l'essieu avant du véhicule qui le suit et ainsi de suite.

En fin de compte, comme cela ressort déjà de la description qui précède et des dessins auxquels il a été fait référence, le train de véhicule 1, conforme à l'invention, étant capable d'effectuer les déplacements de type monotrace, est à même de réaliser ces déplacements en l'absence de rails du type rails de véhicules ferroviaires. Un tel train 1 dont les roues sont alors équipées de pneumatiques procure, ainsi, une meilleure adhérence au sol ce qui permet le franchissement de pentes d'inclinaison plus importantes moyennant une puissance plus faible.

Toutefois, selon l'invention, les deux véhicules 2, 2A placés aux extrémités 17, 18 du train 1 sont de type automoteur à fonctionnement réversible, le véhicule automoteur 2, 2A qui, selon le sens du déplacement du train vient fermer la marche, étant, selon le cas, commandé en mode de fonctionnement autosuffisant pour assurer son déplacement seul sans pousser les autres véhicules 3 du train 1 ou en mode de freinage pour assurer l'arrêt ou le ralentissement du frein 1 ou encore pour maintenir celui-ci en tension en descente.

Tout particulièrement, le train 1 conforme à l'invention, comporte des moyens de gestion du fonctionnement du véhicule automoteur placé en queue de train en fonction des conditions de fonctionnement du véhicule automoteur placé en tête du train, ceci dans les conditions précédemment citées.

A ce propos, chaque véhicule automoteur 2, 2A est muni d'un contacteur qui lorsqu'il est activé au niveau d'un de ces véhicules rend celui-ci maître et l'autre esclave en ce sens qu'il constitue un organe d'information apte à informer les moyens de gestion précités pour le fonctionnement du véhicule automoteur en queue de train.

Préférentiellement, chaque véhicule 2, 2A, 3 reçoit des organes de freinage qui, là encore au travers des moyens de gestion précités sont à même d'être activés successivement en cas de commande de freinage, ceci partant du véhicule automoteur 2A en queue de train jusqu'au véhicule automoteur 2 en tête de train.

On remarquera que ce train, conforme à l'invention, peut encore recevoir des moyens de commande de freinage d'urgence aptes à être activés par l'opérateur depuis le véhicule automoteur 2 en tête du train pour la commande de fonctionnement simultanément, des organes de freinage de chacun des véhicules 2, 2A, 3.

Avantageusement, selon une autre particularité de la présente invention, chaque véhicule 2, 2A, 3 du train 1 reçoit, en outre, des moyens de correction de guidage 19 pour assurer le rattrapage de la dérive résultant, habituellement, du système mécanique du suivi monotrace desdits véhicules 2, 2A, 3. Si une telle dérive ne pose, en soi, aucun problème en dehors du tunnel, à l'intérieur de ce dernier cela pourrait engendrer des difficultés vu la longueur du train 1.

Ainsi, selon l'invention, ces moyens de correction de guidage 19 consistent en des moyens détecteurs 20 placés sur un véhicule 2, 2A, 3 et qui, en coopération avec des moyens de repérage 21 placés au sol, sont à même de commander des moyens 22 d'ajustement de l'orientation des roues 15, 15A d'un essieu 4, 4A, 4B ; 5, 5A selon des amplitudes déterminées.

En quelque sorte, en dehors de la commande d'orientation des essieux d'un véhicule au travers du système mécanique monotrace, il s'effectue individuellement et sur chacun de ces essieux, une correction par rapport à des moyens de repérage 21 qui vont essentiellement s'étendre à l'intérieur du tunnel.

Ainsi, de tels moyens de repérage 21 peuvent se présenter sous forme d'un rail 23 placé au sol sachant que la présente invention n'est nullement limitée à ce mode de réalisation. En effet, de tels moyens de repérage 21 peuvent encore se présenter sous forme d'un marquage au sol voire d'une piste magnétique ou autre. On notera, toutefois, que l'avantage d'un rail de guidage réside dans sa simplicité de mise en oeuvre sans compter qu'il est facilement détectable malgré la présence de saletés, béton ou encore de boues répandues au sol.

Les figures 2, 3 et 4 correspondent à une représentation schématisée du principe de fonctionnement des moyens de correction de guidage 19 tout au moins en ce qui concerne les moyens détecteurs 20 en coopération avec les moyens de repérage 21, ici sous forme d'un rail 23. Ainsi, lesdits moyens détecteurs 20 peuvent se présenter sous forme de capteurs optiques, infrarouges ou autres. Toutefois, selon un mode de réalisation préférentiel de la présente invention, de tels moyens détecteurs 20 sont définis par deux sondes 24, 25 à ultrasons associées à chaque essieu 4, 4A, 4B ; 5, 5A d'un véhicule 2, 2A, 3 et aptes à transmettre une information du type tout ou rien en cas de détection d'un obstacle. Ces sondes 24, 25 émettent, chacune, un faisceau 26, 27 fonction de la hauteur 28 qui les sépare du rail 23 et qui, au niveau de ce dernier, respectent un écartement 29 légèrement supérieur à la largeur 30 dudit rail 23.

Ainsi, si, comme représenté dans la figure 2, ces sondes 24, 25, au travers de leurs faisceaux 26, 27, ne détectent aucun obstacle, il n'y a pas correction du guidage du véhicule, tandis que, dans ces situations correspondant aux figures 3 et 4, l'une ou, selon le cas, l'autre de ces sondes 24, 25 venant détecter le rail, envoie, en direction des moyens 22 d'ajustement de l'orientation des roues de l'essieu correspondant, une information de commande de correction.

A titre d'exemple, par ailleurs illustré dans la figure 9, de tels moyens 22 peuvent se présenter sous forme d'un ou plusieurs vérins 31, 32, placés sur un essieu et aptes, précisément, à commander la rotation des roues 15, 15A, de manière synchrone, par l'intermédiaire de jeux de bielles 33, 33A et de bras 14, 14A appropriés. A noter que cette rotation s'effectue selon des amplitudes réduites pour éviter une correction brutale de l'orientation du véhicule.

Par rapport au système mécanique de suivi monotrace des véhicules 2, 2A, 3, ces moyens 22 d'ajustement de l'orientation des roues 15, 15A d'un essieu sont montées en série.

A noter qu'une fois le train 1 engagé dans le tunnel et que les moyens de correction de guidage 19 sont rendus actifs, ceux-ci sont à même d'assurer, pleinement, la fonction de guidage du train 1 et dispensent, par conséquent, l'opérateur d'un quelconque guidage manuel. De plus, ils peuvent avoir pour fonction de rendre tout simplement inactif les moyens de guidage manuels ou encore de durcir leur fonctionnement ce qui permet à l'opérateur d'intervenir, malgré tout et à tout moment, sur l'orientation de son train 1, notamment en cas d'un incident quelconque.

Contrairement, en sortie du tunnel et une fois les moyens de correction du guidage 19 rendus inactifs en l'absence de rail 23, le guidage manuel du train 1 est, à nouveau, autorisé voire facilité.

Par ailleurs, en vue de faciliter l'approche d'un train 1 par rapport à un rail 23, donc à l'entrée du tunnel, ledit rail 23 est terminé par une plaque d'approche 34. Celle-ci présente en amont une largeur 35 accrue permettant sa détection, simultanément, par chacune des sondes 24, 25 des moyens détecteurs 20, ce qui a pour conséquence, précisément, de rendre les moyens de correction de guidage 19 actifs. Cette plaque d'approche 34 va, ensuite, en se rétrécissant progressivement jusqu'à présenter une largeur identique à celle du rail 23. Aussi, au cas où un essieu d'un véhicule n'est pas centré par rapport à ce rail 23, l'un des faisceaux 26, 27 de ces sondes 24, 25 va détecter, en premier, l'absence d'obstacle, entraînant une correction de guidage sous l'information communiquée par l'autre sonde et ainsi de suite, le système étant pleinement fonctionnel.

Au vu de la description qui précède, l'on comprend que le train 1, ne se déplaçant pas sur des rails, est amené à reposer, directement par l'intermédiaire des roues de son véhicule, sur la paroi interne des voussoirs définissant le tunnel. En fait, ces voussoirs confèrent au sol une forme concave ce qui amènerait les roues 15, 15A des véhicules 2, 2A, 3, si elles étaient sont maintenues en position strictement verticale, à encaisser d'importants efforts transversaux. Ceci aurait pour conséquence, non seulement, de solliciter, fortement, la mécanique, mais, en outre, de conduire à une usure prématurée des pneumatiques dont sont équipées ces roues 15, 15A.

Aussi, selon l'invention, chacune des roues 15, 15A des essieux 4, 4A, 4B ; 5, 5A des véhicules 2, 2A, 3 sont d'inclinaison ajustable, soit gravitairement, soit hydrauliquement ce qui permet à ces roues 15, 15A de s'adapter parfaitement au profil du terrain et, tout particulièrement, au profil concave du sol dans le tunnel, tout en étant pour autant à même d'évoluer, dans des conditions les meilleures, en dehors de ce tunnel, sur sol plat.

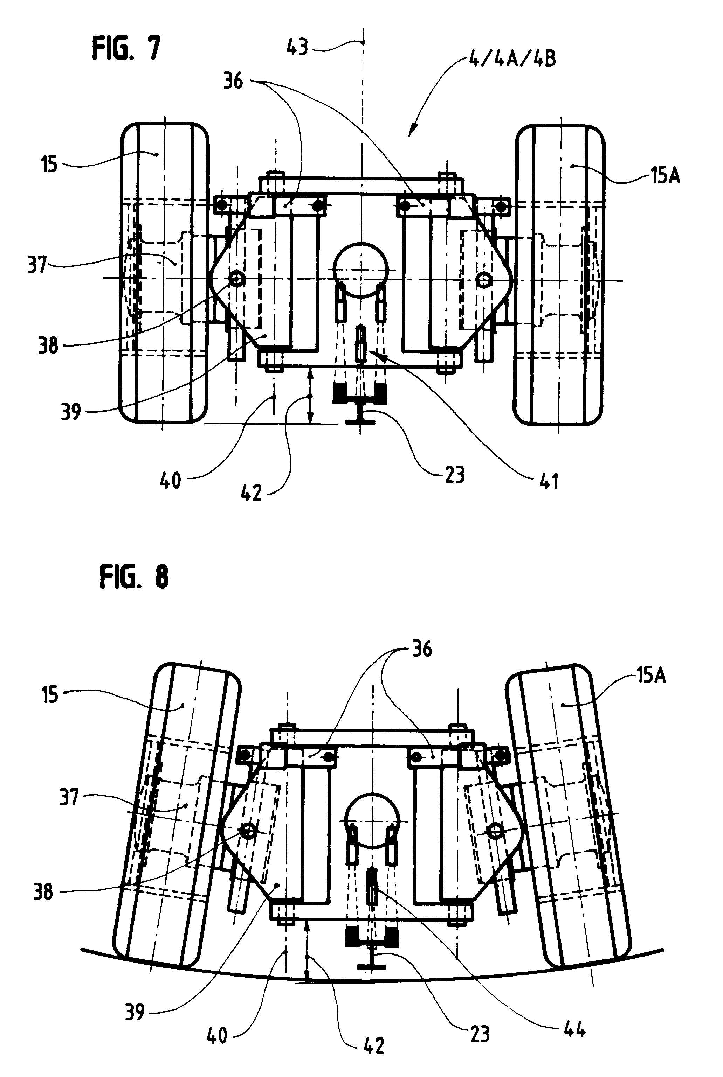

Ainsi, les figures 7 et 8 représentent, de manière schématisée, un essieu 4, 4A, 4B dont les roues 15, 15A sont d'inclinaison ajustables par l'intermédiaire de vérins 36. En fait, la fusée 37 de ces roues 15, 15A est montée pivotante autour d'un axe d'articulation horizontal 38 maintenu par une chape 39 elle-même montée en rotation autour d'un axe vertical 40 sur l'essieu 4.

Préférentiellement, le train 1 comporte des moyens de gestion automatiques 41 de l'inclinaison de ces roues 15, 15A soumises à l'action de vérins 36 hydrauliquement. A ce propos, l'on comprend, évidemment, qu'en passant d'un terrain plat sur un sol de forme concave la garde au sol 42 au plan de milieu 43 du véhicule s'avère plus importante. Aussi, de tels moyens de gestion automatiques 41 peuvent se présenter sous forme de moyens 44 de détection d'une hauteur, par exemple sous forme d'une sonde à ultrasons ou autre placée sous un essieu d'un véhicule. Ces moyens de détection 44 sont dans tous les cas définis à même d'émettre une information par exemple de type analogique permettant d'en déduire l'angle d'inclinaison à conférer aux roues 15, 15A par l'intermédiaire des vérins 36.

Préférentiellement, les moyens de détection 44 ont pour fonction de mesurer la hauteur par rapport au rail 23 sachant, précisément, qu'en dehors de la portée de ce rail 23 et, par conséquent, en dehors du tunnel, le terrain sur lequel est amené à évoluer le train 1 peut être assimilable à un terrain plat. Par contre, à l'intérieur de ce tunnel où se pose le problème, le rail 23 constitue une référence qui reste inchangée dans le temps, alors que l'état du sol peut varier, notamment, par accumulation de déchets ou de mortier.

Dans ces conditions, ces moyens de détection 44 peuvent être rendus actifs que si les moyens de correction du guidage 19 le sont aussi. A l'inverse lorsque ces derniers sont en dehors de la portée du rail 23 et, par conséquent, rendus inactifs, les moyens de détection 44 le sont aussi, ayant pour conséquence de ramener les roues 15, 15A sous l'impulsion des vérins 36 dans leur position verticale.

Selon un autre mode de réalisation, ces roues 15, 15A d'un essieu 4, 4A, 4B ; 5, 5A sont d'inclinaison ajustable gravitairement, tel qu'illustré, plus particulièrement, dans les figures 10 et 11.

En fait, dans ce cas, les roues 15, 15A sont montées de manière décalée vers le bas par rapport à leur axe 45 et par l'intermédiaire d'une rotule 46 sur l'essieu 5, 5A. C'est précisément en raison de ce décalage 47 entre l'axe 45 d'une roue 15, 15A et ladite rotule 46 qu'une telle roue 15, 15A est en mesure de basculer autour de cette dernière, selon un axe de pivotement horizontal, pour s'incliner gravitairement par rapport au sol sur lequel est amené à évoluer le train 1. Cela permet, en fin de compte, à cette roue 15, 15A de se situer, systématiquement, dans un plan 48 strictement perpendiculaire au sol évitant toute répercussion d'effort transversal sur les pneumatiques.

Selon un mode de réalisation préférentiel, les roues 15, 15A sont montées au moyen de la rotule 46 sur l'extrémité d'un bras support 49 par ailleurs monté pivotant autour d'un axe horizontal 50 sur l'essieu. Ce bras support 49 est prolongé, au-delà de son axe d'articulation horizontal 50, par un bras de levier 51 prenant appui sur un ressort 52, s'appuyant, par ailleurs, sur la structure de l'essieu. En fin de compte, le ressort 52, jouant le rôle de suspensions, vient s'opposer à la rotation du bras support 49 autour de son axe d'articulation horizontal 50 sous l'impulsion du couple que vient lui imprimer une roue 15, 15A, lequel couple est proportionnel au poids du véhicule reposant sur ledit essieu.

En raison de son montage décalé par rapport à son axe 45, une telle roue 15, 15A est en outre, maintenue et guidée, dans sa partie supérieure 53 à l'aide d'un étrier de soutien 54 s'étendant, précisément, entre la roue 15, 15A et l'extrémité libre 55 du bras de levier 51, prenant appui sur le ressort 52. Plus précisément, cet étrier de soutien 54 comporte deux branches 54A, 54B qui, à leurs extrémités libres, sont montées coulissantes selon une course 56 définie sur le bras de levier 51 de sorte qu'il vient limiter, entre autres, l'angle d'inclinaison possible d'une roue 15, 15A par rapport à son essieu.

A noter, en outre, que ce mouvement d'inclinaison d'une roue 15, 15A est, préférentiellement, amorti par l'intermédiaire de vérins amortisseurs 58.

Avantageusement, ces vérins 58, s'étendant perpendiculairement au plan 48 d'une roue 15, 15A, relient les étriers de soutien 54 à structure rigide de l'essieu.

En fin de compte, comme visible tout particulièrement dans la figure 11, la fusée 37 d'une roue 15, 15A est montée sur une pièce intermédiaire 59 qui reçoit, dans sa partie inférieure, la rotule 46 pour le montage de cette roue sur le bras support 49, tandis que dans sa partie supérieure, il accueille, là encore au moyen d'une rotule 60, l'étrier de soutien 54 dont les deux branches 54A, 54B sont montées coulissantes sur le bras de levier 51.

Finalement comme cela ressort de la description qui précède, le train de véhicule de transport, du type train suiveur de tunnelier conforme à l'invention, non seulement, présente la souplesse d'utilisation d'un train de type tunnelier, ceci en ce qui concerne son évolution extérieurement au tunnel, sans que cela ne gêne aucunement ses déplacements à l'intérieur de ce dernier. Par ailleurs, au travers d'une conception astucieuse des essieux d'un véhicule, permettant l'inclinaison, par gravité des roues de ces essieux, ceux-ci sont, non seulement, à même de s'adapter au profilé du terrain sur lequel évolue le train mais, en outre, ils sont en mesure d'amortir le franchissement d'obstacles par exemple. On remarquera, à ce propos, que, jusqu'à présent, les véhicules de ce type de train étaient, généralement dépourvus de toute suspension.

En conséquence, la présente invention doit être considérée comme un net progrès dans ce domaine de train de véhicule de transport de type train suiveur de tunnelier.

## Revendications

1. Train de véhicule de transport, du type train suiveur de tunnelier, dont les véhicules (2, 2A, 3), montés chacun sur des essieux directeurs (4, 4A, 4B ; 5, 5A), sont reliés entre eux par des moyens d'articulation (6) constituant, en outre, des moyens de commande d'orientation des essieux directeurs pour un déplacement du type monotrace du train (1), caractérisé par le fait que les deux véhicules (2, 2A) placés aux extrémités (17, 18) du train (1) sont du type automoteur à fonctionnement réversible, le véhicule automoteur (2 ; 2A) qui, dans le sens du déplacement du train vient fermer la marche étant, par l'intermédiaire de moyens de gestion de fonctionnement approprié, selon le cas, commandé en mode de fonctionnement autosuffisant pour assurer son déplacement sans pousser les autres véhicules du train ou en mode de freinage pour permettre l'arrêt ou le ralentissement du train (1) ou encore pour maintenir celui-ci en tension en descente.

2. Train de véhicule de transport selon la revendication 1, caractérisé par le fait qu'il comporte des moyens de gestion du véhicule automoteur placé en queue de train en fonction des conditions de fonctionnement du véhicule automoteur placé en tête de train, chaque véhicule automoteur (2, 2A) étant muni d'un contacteur qui, lorsqu'il est activé au niveau d'un de ces véhicules rend celui-ci maître, l'autre esclave et constitue un organe d'information apte à informer lesdits moyens de gestion pour le fonctionnement du véhicule automoteur en queue de train.

3. Train de véhicule de transport selon la revendication 2, caractérisé par le fait que lesdits moyens de gestion du fonctionnement du véhicule automoteur placé en queue de train sont prévus aptes à activer, successivement, en cas de commande de freinage, des organes de freinage équipant chacun des véhicules (2, 2A, 3), ceci partant du véhicule automoteur en queue de train jusqu'au véhicule automoteur en tête de train.

4. Train de véhicule de transport selon l'une quelconque des revendications précédentes, caractérisé par le fait qu'il comporte des moyens de commande de freinage d'urgence aptes à être activés par le véhicule automoteur en tête de train pour la commande de fonctionnement simultanée d'organes de freinage équipant chacun des véhicules (2, 2A, 3).

5. Train de véhicule de transport selon l'une quelconque des revendications précédentes, caractérisé par le fait que chaque véhicule (2, 2A, 3) reçoit des moyens de correction de guidage (19) pour assurer le rattrapage de la dérive résultant du système mécanique de suivi monotrace desdits véhicules (2, 2A, 3), lesdits moyens de correction de guidage (19) consistant en des moyens détecteurs (20) placés sur un véhicule (2, 2A, 3) et qui, en coopération avec des moyens de repérage (21) placés au sol, sont à même de commander des moyens (22) d'ajustement de l'orientation des roues (15, 15A) d'un essieu (4, 4A, 4B ; 5, 5A) selon des amplitudes déterminées.

6. Train de véhicule de transport selon la revendication 5, caractérisé par le fait que les moyens de repérage (21) sont définis par un rail (23) placé au sol, tandis que les moyens détecteurs (20) se présentent sous forme de deux sondes (24, 25) notamment à ultrasons, associées à chaque essieu (4, 4A, 4B ; 5, 5A) d'un véhicule (2, 2A, 3), émettant chacune un faisceau (26, 27), fonction de la hauteur (28) qui les sépare du rail (23) et qui, au niveau de ce dernier, respectent un écartement (29) légèrement supérieur à la largeur (30) dudit rail (23), ces sondes (24, 25) étant aptes à transmettre une information du type tout ou rien en cas de détection d'un obstacle que constitue, notamment le rail (23).

7. Train de véhicule de transport selon l'une quelconque des revendications 5 et 6, caractérisé par le fait que les moyens (22) d'ajustement de l'orientation des roues (15, 15A) d'un essieu (4, 4A, 4B ; 5, 5A) selon des amplitudes déterminées se présentent sous forme d'un ou plusieurs vérins (31, 32) placés sur un essieu et aptes à commander la rotation des roues (15, 15A), de manière synchrone par l'intermédiaire de jeux de bielles (33, 33A) et de bras (14, 14A) appropriés.

8. Train de véhicule de transport selon l'une quelconque des revendications 6 et 7, caractérisé par le fait que le rail (23) comporte une plaque d'approche (34) présentant, en amont, une largeur (35) accrue permettant sa détection, simultanément, par chacune des sondes (24, 25) des moyens détecteurs (20) en vue de rendre les moyens de correction de guidage (19) actifs, cette plaque d'approche (34) allant, ensuite, en se rétrécissant, progressivement, jusqu'à présenter une largeur identique à celle du rail (23).

9. Train de véhicule de transport selon l'une quelconque des revendications 5 à 8, caractérisé par le fait que les moyens de correction de guidage (19) sont prévus, aptes, lorsqu'ils sont rendus actifs au travers de la coopération des moyens détecteurs (20) avec les moyens de repérage (21), à rendre inactifs des moyens de guidage manuels du train (1) et/ou à durcir leur fonctionnement.

10. Train de véhicule de transport selon l'une quelconque des revendications précédentes, caractérisé par le fait que chacune des roues (15, 15A) des essieux (4, 4A, 4B ; 5, 5A) des véhicules (2, 2A, 3) sont d'inclinaison ajustable, soit gravitairement, soit hydrauliquement.

11. Train de véhicule de transport selon la revendication 10, caractérisé par le fait que les roues (15, 15A) d'un essieu (4, 4A, 4B) sont d'inclinaison ajustable par l'intermédiaire de vérins (36), la fusée (37) de ces roues (15, 15A) étant montée pivotante autour d'un axe d'articulation horizontal (38) maintenu par une chape (39) elle-même montée en rotation autour d'un axe vertical (40) sur l'essieu (4, 4A, 4B).

12. Train de véhicule de transport selon la revendication 11, caractérisé par le fait qu'il comporte des moyens de gestion automatique (41) de l'inclinaison des roues (15, 15A) soumises à l'action de vérins (36) hydrauliques.

13. Train de véhicule de transport selon la revendication 12, caractérisé par le fait que les moyens de gestion automatique (41) se présentent sous forme de moyens (44) de détection d'une hauteur telle qu'une sonde à ultrasons ou autre, placés sous un essieu d'un véhicule, ces moyens de détection (44) étant définis à même d'émettre une information de type analogique permettant d'en déduire l'angle d'inclinaison à conférer aux roues (15, 15A) par l'intermédiaire desdits vérins (36).

14. Train de véhicule de transport selon la revendication 13, caractérisé par le fait que les moyens de détection (44) sont prévus aptes à mesurer la hauteur par rapport au rail (23) et sont activés en même temps que les moyens de correction de guidage (19).

15. Train de véhicule de transport selon la revendication 10, caractérisé par le fait que les roues (15, 15A), d'inclinaison ajustable gravitairement, sont montées, de manière décalée par rapport à leur axe (45) et par l'intermédiaire d'une rotule (46), sur l'essieu (5, 5A).

16. Train de véhicule de transport selon la revendication 15, caractérisé par le fait que les roues (15, 15A) sont montées au moyen de la rotule (46) sur l'extrémité d'un bras support (49), par ailleurs monté pivotant autour d'un axe horizontal (50) sur l'essieu (5, 5A), ce bras support (49) étant prolongé, au-delà de son axe d'articulation (50) par un bras de levier (51) prenant appui sur un ressort (52) venant s'appuyer sur la structure dudit essieu (5, 5A).

17. Train de véhicule de transport selon la revendication 16, caractérisé par le fait qu'une roue (15, 15A) est guidée dans sa partie supérieure (53) à l'aide d'un étrier de soutien (54) s'étendant entre ladite roue (15, 15A) et, le bras de levier (51) prenant appui sur le ressort (52), ledit étrier de soutien (54) comportant deux branches (54A, 54B) qui, à leurs extrémités libres, sont montées coulissantes, selon une course (56) définie, sur ledit bras de levier (51) de manière apte à limiter l'angle d'inclinaison d'une roue (15, 15A) par rapport à son essieu (5, 5A).

18. Train de véhicule de transport selon la revendication 17, caractérisé par le fait qu'un vérin amortisseur (58) s'étendant perpendiculairement au plan (48) d'une roue (15, 15A) relie l'étrier de soutien (54) de cette dernière à la structure rigide de l'essieu.

19. Train de véhicule de transport selon les revendications 16 et 17, caractérisé par le fait que la fusée (37) d'une roue (15, 15A) est montée sur une pièce intermédiaire (59) qui reçoit, dans sa partie inférieure, la rotule (46) pour le montage de cette roue sur le bras support (49), tandis que dans sa partie supérieure il accueille, au moyen d'une rotule (60), l'étrier de soutien (54) dont les deux branches (54A, 54B) sont montées coulissantes sur le bras de levier (51).
